Europäisches Patentamt

European Patent Office

Office européen des brevets

(11) Publication number: **0 196 898 B1**

# EUROPEAN PATENT SPECIFICATION

(45) Date of publication of patent specification: **28.10.92**   (51) Int. Cl.⁵: **G06F  15/20**

(21) Application number: **86302358.6**

(22) Date of filing: **27.03.86**

(54) Machine translation system.

(30) Priority: **29.03.85 JP 63456/85**

(43) Date of publication of application:
**08.10.86 Bulletin  86/41**

(45) Publication of the grant of the patent:
**28.10.92 Bulletin  92/44**

(84) Designated Contracting States:
**DE FR GB**

(56) References cited:
**EP-A- 12 777**
**EP-A- 0 081 784**

**PATENT ABSTRACTS OF JAPAN, vol. 9, no. 141 (P-364)[1864], 15th June 1985; & JP-A-60 20 283 (TOSHIBA K.K.) 01-02-1985**

**PATENT ABSTRACTS OF JAPAN, vol. 8, no. 214 (P-304)[1651], 29th September 1984; & JP-A-59 95 672 (TOSHIBA K.K.) 01-06-1984**

(73) Proprietor: **KABUSHIKI KAISHA TOSHIBA**
**72, Horikawa-cho Saiwai-ku**
**Kawasaki-shi Kanagawa-ken 210(JP)**

(72) Inventor: **Doi, Miwako Patent Division**
**K.K. Toshiba 1-1 Shibaura 1-chome**
**Minato-ku Tokyo 105(JP)**
Inventor: **Amano, Shin-ya Patent Division**
**K.K. Toshiba 1-1 Shibaura 1-chome**
**Minato-ku Tokyo 105(JP)**
Inventor: **Miike, Seiji Patent Division**
**K.K. Toshiba 1-1 Shibaura 1-chome**
**Minato-ku Tokyo 105(JP)**
Inventor: **Nogami, Hiroyasu Patent Division**
**K.K. Toshiba 1-1 Shibaura 1-chome**
**Minato-ku Tokyo 105(JP)**
Inventor: **Kumano, Akira Patent Division**
**K.K. Toshiba 1-1 Shibaura 1-chome**
**Minato-ku Tokyo 105(JP)**
Inventor: **Takeda, Kimihito Patent Division**
**K.K. Toshiba 1-1 Shibaura 1-chome**
**Minato-ku Tokyo 105(JP)**
Inventor: **Adachi, Hisahiro Patent Division**
**K.K. Toshiba 1-1 Shibaura 1-chome**
**Minato-ku Tokyo 105(JP)**
Inventor: **Iwai, Isamu Patent Division**
**K.K. Toshiba 1-1 Shibaura 1-chome**
**Minato-ku Tokyo 105(JP)**
Inventor: **Okamoto, Toshio Patent Division**
**K.K. Toshiba 1-1 Shibaura 1-chome**
**Minato-ku Tokyo 105(JP)**

Inventor: **Yamanaka, Noriko Patent Division**
**K.K. Toshiba 1-1 Shibaura 1-chome**
**Minato-ku Tokyo 105(JP)**
Inventor: **Kawada, Tsutomu Patent Division**
**K.K. Toshiba 1-1 Shibaura 1-chome**
**Minato-ku Tokyo 105(JP)**


(74) Representative: **Freed, Arthur Woolf et al**
**MARKS & CLERK 57-60 Lincoln's Inn Fields**
**London WC2A 3LS(GB)**

## Description

The present invention relates to a machine translation system for processing a sentence of a language to translate it into a sentence of another language and, more particularly, to a machine translation system wherein the translated sentence is output together with the original sentence in one-to-one correspondence therewith, thereby simplifying operator inputs for translation processing.

Various types of computer-aided machine translation systems, e.g., a system for translating English sentences to Japanese sentences and vice versa, have been proposed in recent years. Each sentence of input original sentences is divided into words or phrases as processing units for syntactic analysis, and a translation dictionary is accessed for each word or phrase, retrieving a translated word or phrase. Finally, the translated words or phrases are combined into a translated sentence. When two or more translated sentences are obtained for the same original sentence, the original sentence is syntactically analyzed, and any translated sentence regarded as improper in accordance with the analysis results is eliminated. Such a system is disclosed in E.P. patent document no. 12777.

After the improper translated sentences are eliminated, there still remains a variety of possible translated words or phrases for the translated sentence regarded as proper. More specifically, each original word or phrase often has different parts of speech and different meanings. In order to obtain appropriate equivalents to such an original word or phrase, the translated word or phrase must be selected in accordance with parts of speech and meaning. When a translated word or phrase corresponding to the original word or phrase is changed due to modification, the appropriate translated word or phrase must be selected. In this case, proper selection changes greatly in accordance with the contents of the sentence to be translated, and with the intention of an operator or translator (user), and thus cannot be solely determined. For this reason, the translated sentence is displayed on a display, and the operator selects translation possibilities for each word of the translated sentence, and the operator refers to the corresponding original sentence, thereby properly determining the translated sentence.

In the conventional system, the translated sentence and the original sentence are displayed on a display to allow the operator to compare them. In such a system, the screen is vertically or horizontally divided into halves, with original sentences displayed on one half and translated sentences displayed on the other half. An example of a horizontally divided display system is disclosed in E.P.

patent document no. 81784. In another conventional system, the original and translated sentences are alternately displayed on a single screen area.

In the system employing the divided screen format, all the original and translated sentences are displayed on corresponding screen areas, exactly in the same form as they have been input and provided. Therefore, it is difficult for the operator to recognize which original sentence corresponds to which translated sentence, making it hard to edit the original or translated sentences efficiently.

When a given translated word is to be corrected, the translator must refer to the corresponding part of the original sentence. In other words, the translator must find that portion of the original sentence which corresponds to the translated word by reading the original text in units of sentences or paragraphs. Therefore, when the corresponding original portion is at the central portion of the original document, or if the original sentence is very long, it will take him or her a long time to find the original portion corresponding to the translated word to be corrected.

In the system employing the latter screen format, the correspondence between the original sentence and the translated sentence is clear. However, the length of the original sentence may differ greatly from that of the translated sentence. This complicates display control. When the original and translated sentences are alternately displayed on the screen, it is inconvenient to read only one of the translated or original sentences at a time.

It is an object of the present invention as claimed, to provide a machine translation system, wherein control is not complicated, and original and translated sentences can be output such that their correspondence can be readily recognized.

In order to achieve the above object of the present invention, there is provided a machine translation system comprising a translation processor for performing translating an original sentence by accessing a dictionary to produce a translated sentence corresponding to the original sentence, and an output device for outputting, e.g., displaying/printing the translated sentence produced by the translation processor and the original sentence, wherein the output device comprises a management section with original and translated sentence output regions as left and right output regions for displaying or printing the translated and original sentences in horizontal direction, the management section being arranged to manage the original and translated sentences in units of sentences, and an output control section for causing the output device to output the original and translated sentences managed by the managing section, so that a start line of the original sentence corresponds to a start line of the translated sentence and that a line space is inserted between each two adjacent original and translated sentences output at the left and right output regions.

According to the machine translation system of the present invention, the original and translated sentence output regions serve as the left and right output regions. The start line positions of the original and translated sentences correspond to each other. A line space is formed between each two adjacent ones of original and translated sentences. In other words, the original sentence is horizontally aligned with the corresponding translated sentence on the output surface to allow the operator to readily understand its correspondence. In addition, a line space is formed between each two adjacent sentences in each output region, so that the operator can readily distinguish a given sentence from an adjacent sentence.

The operator (translator) of this system can easily find on the output surface (e.g., a display screen) an original sentence portion corresponding to the translated sentence including a word or phrase to be corrected, or a translated sentence corresponding to the original sentence including the word or phrase to be corrected. The operator can easily correct the translated or original sentence. Thus, labor is saved on the part of the operator.

Since the sentences, as translation processing units, are managed so that the start line position of the original sentence is matched with that of the corresponding translated sentence and output control is simplified.

This invention can be more fully understood from the following detailed description when taken in conjunction with the accompanying drawings, in which:

Fig. 1 is a block diagram showing a schematic configuration of a machine translation system according to an embodiment of the present invention;

Fig. 2 is a plan view of a screen showing display states of original and translated sentences;

Fig. 3 is a flow chart for explaining a display control sequence for displaying the original and translated sentences at corresponding positions, as shown in Fig. 2;

Figs. 4A to 4C are plan views showing screen scroll states of the original and translated sentences of the system of Fig. 1; and

Fig. 5 is a flow chart for explaining a scroll control sequence for scrolling the screen of the original and translated sentences shown in Figs. 4A to 4C.

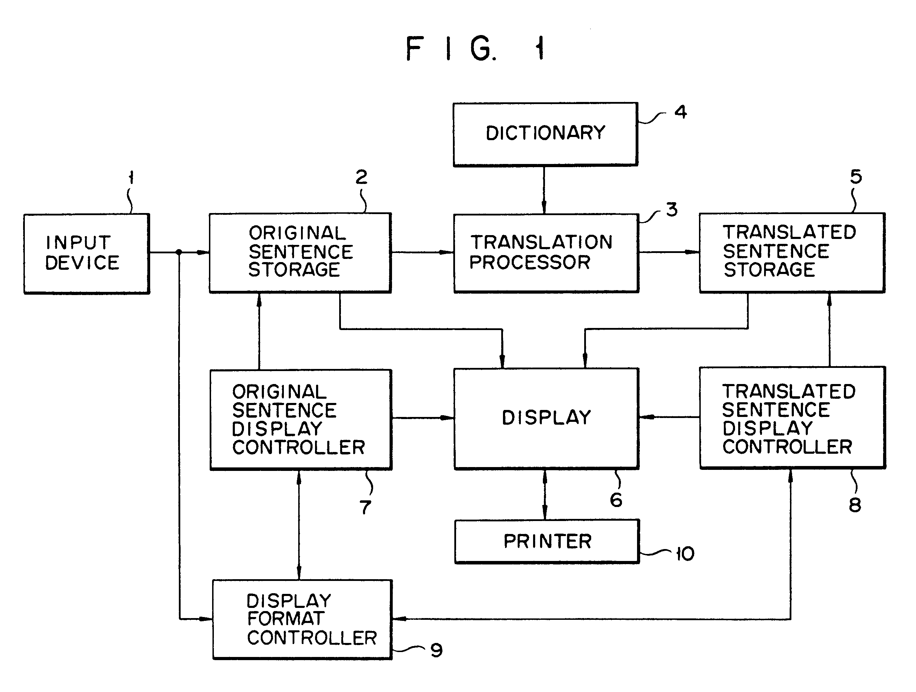

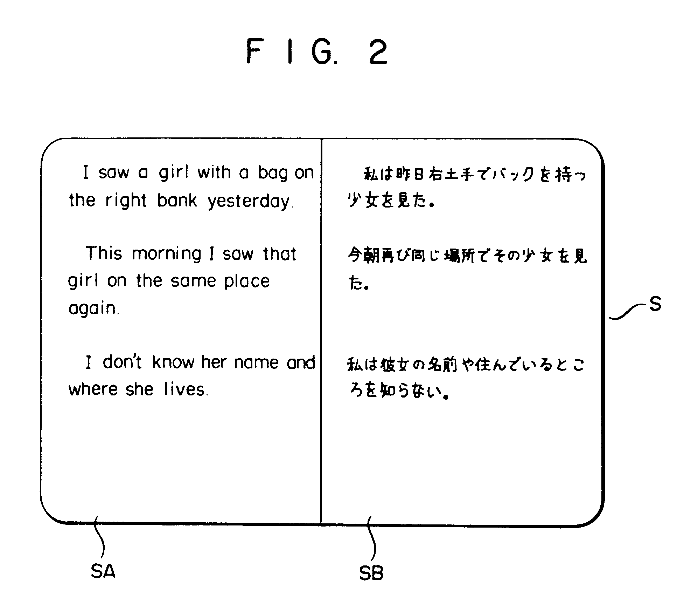

Fig. 1 shows a schematic configuration of a machine translation system according to an embodiment of the present invention, and Fig. 2 shows a display state of original and translated sentences in the system of Fig. 1. In this embodiment, English sentences are input to the system and are processed and translated into Japanese sentences.

Original English sentences input at input device 1 are stored in original sentence storage 2. The original sentences are output from storage 2 in predetermined translation processing units, e.g., each sentence, and are sequentially supplied to translation processor 3. The original sentences may also be read out from storage 2 in units of paragraphs. Division of sentences is discriminated by detecting a full-stop or the like in the input character string. The divided single sentences are assigned with sentence numbers from I to n, and the input original sentences can be managed in accordance with the sentence numbers. Inputs to processor 3 are controlled by the sentence numbers.

Processor 3 divides each original sentence (i.e., a first sentence) into words or phrases, as syntactic analysis processing units. In doing so, the original sentence is divided into words by detecting blank spaces in the character string. Processor 3 accesses dictionary 4 to obtain translation possibilities for the original words. Dictionary 4 is a data base for storing translated words or phrases corresponding to the words or phrases of the original sentences. Processor 3 also performs syntactic analysis of the input original sentences. Processor 3 eliminates improper translation possibilities from among all possibilities in accordance with the syntactic analysis results, and produces translation possibilities for the original sentence with combinations of the remaining translation possibilities for the original words. Each original word usually has a plurality of translation possibilities according to the parts of speech, meaning, and modification. Therefore, a plurality of translation possibilities are prepared for the original sentence. These translation possibilities for the original sentence are stored together with selection data in translated sentence storage 5. In this case, the same sentence numbers as in the original sentences are assigned to the corresponding translation possibilities. The translation possibilities are thus managed in correspondence with the original sentences.

Display screen S of display 6 is divided into right and left screen regions by a so-called multiwindow function. The left region serves as original sentence display region SA, and the right region serves as translated sentence display region SB, as shown in Fig. 2. Display 6 is controlled by original and translated sentence display controllers 7 and 8. The original and translated sentences read out in units of sentences from storages 2 and 5 are displayed on regions SA and SB of display 6 from left to right. Display format controller 9 receives display control data input through device 1 and controls original and translated sentence readout operations of controllers 7 and 8 and hence the display formats of the original and translated sentences, managed as described above.

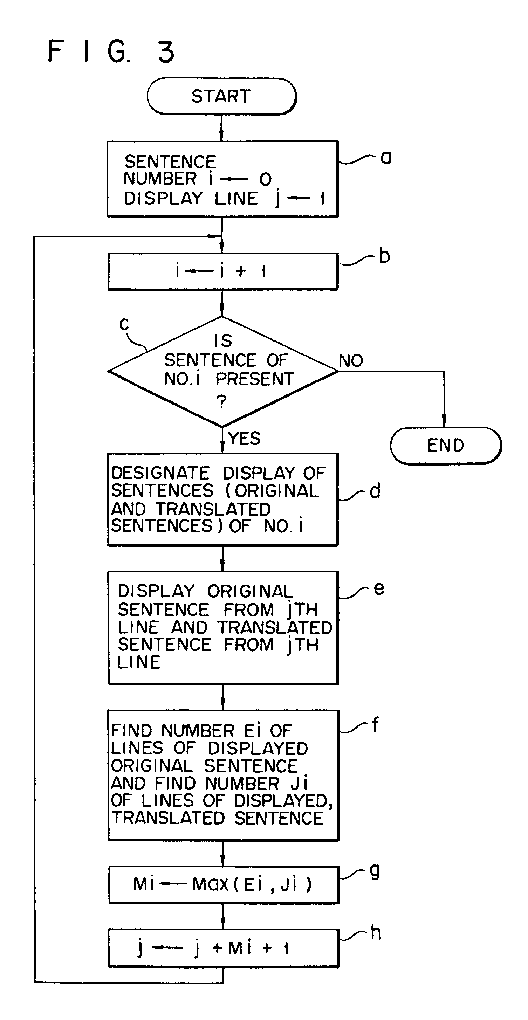

Fig. 3 is a flow chart for explaining a basic control sequence of display of the original and translated sentences under the control of controller 9.

In controller 9, display control parameters i and j are initialized to "0" and "1" to display the original and translated sentences (step a). Parameter i designates the sentence number, and parameter j designates a display line position of the character string data constituting a sentence. After initialization, parameter i is incremented by 1 (step b), and controller 9 checks in step c if sentences (the original and translated sentences) of the sentence number corresponding to the value of parameter i are present. When the sentences of sentence number i are detected as being stored in storages 2 and 5, respectively, the sentence display control signals are supplied to controllers 7 and 8 (step d).

Controllers 7 and 8 respectively read out the original and translated sentences of sentence number i from storages 2 and 5, respectively. The readout sentences are then supplied to display 6 and are displayed at display start lines of regions SA and SB which are represented by parameter j (step e). Numbers of display lines Ei and ji of the original and translated sentences displayed in regions SA and SB are respectively detected by controllers 7 and 8 (step f). Controller 9 then calculates a larger number of display lines using data Ei and Ji as follows:

$$Mi \leftarrow max(Ei, Ji)$$

Number Mi is the number of display lines necessary for displaying the original and translated sentences of sentence number i on display 6 (step g).

Subsequently, parameter j is updated (step h) using Mi as follows:

$$j \leftarrow j + Mi + I$$

and the flow then returns to step b. In step b, parameter (sentence number) i is updated, and the next sentence display is controlled in the same manner as described above. In this case, parameter j can be updated to a number larger by one line than the number of display lines for the previous sentences, thereby forming at least one line space after the final display line of the previous sentences.

Thus, the input original sentences correspond to the translated sentences obtained by processing the original sentences in units of sentences as the translation processing units in processor 3, so that the start line positions of the original and translated sentences are aligned with each other on the screen and are respectively displayed in regions SA and SB. Furthermore, the original or translated sentences in each region SA or SB are separated by one line space between each sentence.

Therefore, when the translator or operator wants to correct the displayed translated sentence candidate, he can easily recognize the correspondence between the translated sentence portion to be corrected and the corresponding original sentence portion, thereby simplifying correction. Since display control is simple, as described above, control load of the system is decreased.

The possible number of display lines in display 6 tends to be small as compared with all the sentences to be processed, and therefore, all the sentences cannot be simultaneously displayed on screens. In this case, only some of the sentences are selectively displayed on the screen. When the sentences managed in units of sentences and displayed on display 6 are edited, the original and translated sentences must be scrolled to display the subsequent sentences.

In this case, the translated and original sentences are simultaneously scrolled in regions SA and SB to maintain the correspondence therebetween. When an original sentence is compared with a translated sentence in the machine translation system of this invention, corresponding portions of the original and translated sentences must often be displayed as entire sentences to allow comparison therebetween. Therefore, in this system, the scroll control of the display screen is performed in units of sentences.

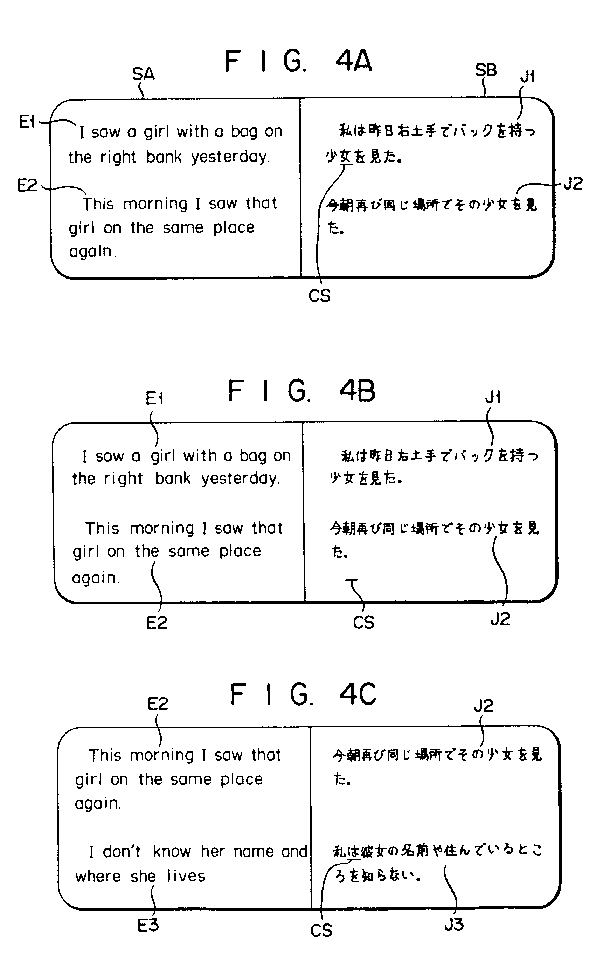

As shown in Fig. 4A, English sentences E1 and E2 as original sentences are displayed in region SA, and corresponding Japanese sentences J1 and J2 are displayed in region SB. In this case, cursor CS is located at the second character position of the second line of sentence J1. When the operator moves the cursor downward on the display screen, the cursor is located on the lowermost line (second character position), as shown in Fig. 4B. In this state, when the operator moves the cursor downward on the screen, the display contents are scrolled in units of sentences. Therefore, as shown in Fig. 4C, original sentence E3 and corresponding translated sentence J3 appear at the lower ends of regions SA and SB, and sentence E1 and J1 displayed at the upper ends of regions SA and SB shown in Figs. 4A and 4B disappear from regions SA and SB. Therefore, sentences E2 and E3 are displayed in region SA, and sentences J2 and J3 respectively corresponding to sentences E2 and E3 are displayed in region SB.

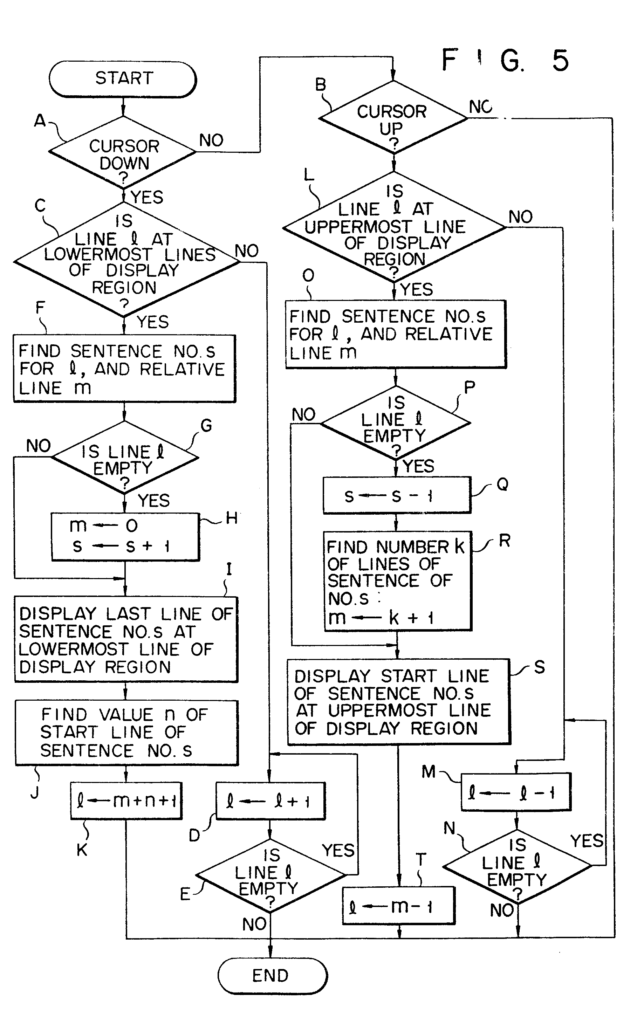

Fig. 5 is a flow chart for explaining a scroll control sequence accompanying cursor shifting.

Input data entered upon operation of a predetermined key on a keyboard (not shown) is determined to indicate a cursor-down (the cursor is moved downward) command (step A) or a cursor-up (the cursor is moved upward) command (step B).

When the cursor-down command is entered, it is checked if line $l$ designated by the cursor on the screen is on the lowermost line of regions SA and SB (step C). If the cursor-located line is not the lowermost line, as shown in Fig. 4A, line $l$ is incremented by 1 (step D). If the updated line $l$ represents line spacing, line $l$ is continuously incremented (steps D and E). When the display start line position of a given sentence is designated by the cursor, the cursor-down operation is performed, and the system waits for the next command. The operator (user) judges if the sentence designated by the cursor on the display screen is to be edited.

As shown in Fig. 4B, when the cursor designated line $l$ is determined in step C to be the lowermost line of the display region, sentences following the lowermost line of the regions SA and SB are to be displayed. Sentence number $s$ of sentences displayed on line $l$ and relative line (line position from the start line of the sentence) $m$ are then calculated (step F). It is determined if updated line $l$ represents line spacing (step G). If YES in step G, $m$ is initialized to "0" and, at the same time, $s$ is incremented by one (step H), thus confirming that the sentences to be displayed are those of the next sentence number. However, if NO in step G, all sentences represented by sentence number $s$ must be displayed.

When this processing is completed, all the display contents are scrolled so that the last lines of the sentences of sentence number $s$ are located on the lowermost lines of regions SA and SB (step I). Upon scrolling, the entire sentences of sentence number $s$ are displayed at the lower positions of regions SA and SB. Start line display position (display line) of sentences of sentence number $s$ displayed at the lower positions of regions SA and SB is calculated (step J), and line (line of interest) $l$ designated by the cursor is updated (step K) as follows:

$$l \leftarrow m + n + 1$$

In the processing of step K, the cursor designates an identical character position of the line next to the line designated by the cursor prior to scrolling, as shown in Fig. 4C.

However, when a cursor-up command is generated, processing (steps L to T) resembling those from step C to step K is performed.

In step L, it is checked if cursor designated line $l$ is on the uppermost line of regions SA and SB. If NO in step L, line $l$ is decremented by one. In this case, if updated line $l$ represents line spacing, line $l$ is continuously decremented (steps M and N). When the uppermost display line is designated by the cursor, cursor-up operation is ended.

If YES in step L, the sentences prior to the uppermost line of the regions SA and SB are to be displayed. Sentence number $s$ of the sentences displayed on line $l$ and relative line (the line position from the start line of the sentence) $m$ are calculated. It is determined if line $l$ represents line spacing (step P). If YES in step P, sentence number $s$ is decremented (step Q), and the sentences to be displayed are the ones of the immediately preceding sentence number. Line number K represented by sentence number $s$ is calculated, and parameter (number of lines) $m$ is updated (step R) as follows:

$$m \leftarrow k + 1$$

This operation indicates that a value obtained by adding one line space to the number of lines of sentence number $s$ is necessary for displaying the sentence of number $s$ while the display format is kept unchanged. However, if NO in step P, the entire sentence of number $s$ must be displayed.

After this processing is completed, all the display contents are scrolled so that the start lines of number $s$ are located on the uppermost lines of regions SA and SB (step S). Thus, the entire sentences of number $s$ are displayed at the upper positions of regions SA and SB. Line (line of interest) $l$ displayed by the cursor is updated (step T) as follows, with respect to the sentences of number $s$ displayed at the upper positions of regions SA and SB:

$$l \leftarrow m - 1$$

In the processing of step T, the cursor designates the identical character position of the line corresponding to the immediately preceding line designated by the cursor prior to scrolling.

Screen scrolling need not be limited to control using cursor shift commands. For example, a scroll key or the like may be used to perform the same scrolling in units of translation processing as with the cursor shift commands. In this case, sentences to be displayed on the screen are preferably displayed entirely.

When the above processing is performed for original and translated sentences, these sentences can be managed in units of translation processing. At the same time, each two adjacent original or translated sentences are separated by line spacing and are displayed in the corresponding output region of the display. When the number of display lines of the translated sentence is different from that of the original sentence, line spaces are inserted after the sentence with a smaller number of display lines, thereby aligning the start lines of the subsequent original and translated sentences. In this manner, line spaces are used to separate each two adjacent sentences and to adjust the line number, thereby simplifying display control for the following reason: the line space can normally be entered by inputting carriage return and line feed characters.

The display contents of display 6 can be printed out at printer 10 as needed. When both the original and translated sentences are to be printed and the same printing format as that of display 6 is used, printer outputs can be visually recognized with ease. In addition, original or translated sentences can be printed separately at printer 10.

According to this system, the translated sentences produced by processor 3 and their corresponding original sentences are displayed in units of processing, i.e., sentences with one-to-one correspondence. The operator can perform translation and editing while clearly understanding the correspondence between the original and translated sentences. Therefore, the operator load in editing can be greatly decreased.

The present invention is not limited to the particular embodiment described above.

For example, translation is not limited from English to Japanese, but can be extended to other languages. Display control algorithms can be modified in accordance with system specifications (e.g., hardware and software configurations). The number of line spaces used as separation marks of sentences can be arbitrarily selected. Alternatively, a line consisting of other symbols or the like can be inserted as the separation line.

## Claims

1. A machine translation system comprising:
   translation processing means (3, 4) having a dictionary (4) for storing translation data necessary for translation, said translation processing means (3, 4) being adapted to translate a given original text in units of sentences, thereby to translate the sentences of the original text into respective sentences of a translation text;
   output means (6, 10) for outputting the sentences of the original text and for ouputting the sentences of the translation text;
   supply means (7, 8) for supplying the sentences of the original text and the translation text to the output means (6, 10), characterised in that
   said output means (6, 10) includes a translation output section (SB) for outputting the sentences of the translation text in lateral lines, and an original output section (SA) for outputting the sentences of the original text in lateral lines in side-by-side relationship with respective sentences of the translation text; and
   output position control means (9) for controlling output positions of the sentences of the original text and the sentences of the translation text supplied from said supply means (7, 8), such that each sentence of the original text and the respective sentence of the translation text begin from the same line extending laterally.

2. A system according to claim 1, characterised in that said output position control means comprises:
   separating means (9) for inserting a predetermined lateral separator line output between end lines and start lines of the respective sentences of the original and translation texts.

3. A system according to claim 2, characterized in that said separating means comprises means (9) for inserting a spacing lines as the separator line.

4. A system according to claim 1, characterized in that said output means comprises a display means (6) having a translation display section (SB) serving as said translation output section, and an original display section (SA) serving as said original output section.

5. A machine translation system as claimed in claim 4, further comprising
   scroll designating means (1) for designating scrolling of at least one of the original and translation texts displayed on said display means (6); and
   scroll control means (9) for scrolling the sentences of the original text and translation text, in both said original and translation display sections (SA, SB) in units of the respective original and translated sentences, when a scroll command is generated by said scroll designating means (1).

6. A system according to claim 5, characterized in that said scroll designating means comprises cursor shift designating means (1) for designating cursor shifting.

## Patentansprüche

1. Maschinenübersetzungssystem mit:

einer Übersetzungsverarbeitungseinrichtung (3, 4) mit einem Wörterbuch (4) zum Speichern von für Übersetzungen notwendigen Übersetzungsdaten, wobei die Übersetzungsverarbeitungseinrichtung (3, 4) angepaßt ist, einen gegebenen ursprünglichen Text in Einheiten von Texten zu übersetzen, um dadurch die Sätze des ursprünglichen Textes in jeweilige Sätze eines Übersetzungstextes zu übersetzen,

einer Ausgabeeinrichtung (6, 10) zum Ausgeben der Sätze des ursprünglichen Textes und zum Ausgeben der Sätze des Übersetzungstextes,

einer Speiseeinrichtung (7, 8) zum Einspeisen der Sätze des ursprünglichen Textes und des Übersetsungstextes zu der Ausgabeeinrichtung (6, 10), dadurch gekennzeichnet, daß

die Ausgabeeinrichtung (6, 10) einen Übersetzungsausgabeabschnitt (SB) zum Ausgeben der Sätze des Übersetzungstextes in seitlichen Zeilen und einen Original-Ausgabeabschnitt (SA) zum Ausgeben der Sätze des ursprünglichen Textes in seitlichen Zeilen in Seite-an-Seite-Beziehung mit jeweiligen Sätzen des Übersetzungstextes umfaßt, und

eine Ausgabepositionssteuereinrichtung (9) zum Steuern der Ausgabepositionen der Sätze des ursprünglichen Textes und der Sätze des Übersetzungstextes, eingespeist von der Speiseeinrichtung (7, 8), derart steuert, daß jeder Satz des ursprünglichen Textes und der jeweilige Satz des Übersetzungstextes von der gleichen, sich seitlich erstreckenden Zeile beginnen.

2. System nach Anspruch 1, dadurch gekennzeichnet, daß die Ausgabepositionssteuereinrichtung aufweist;

eine Trenneinrichtung (9) zum Einfügen eines vorbestimmten seitlichen Trennerzeilenausganges zwischen Endzeilen und Startzeilen der jeweiligen Sätze des ursprünglichen Textes und das Übersetzungstextes.

3. System nach Anspruch 2, dadurch gekennzeichnet, daß die Trenneinrichtung eine Einrichtung (9) zum Einfügen einer Abstandszeile als die Trennzeile hat.

4. System nach Anspruch 1, dadurch gekennzeichnet, daß die Ausgabeeinrichtung eine Anzeigeeinrichtung (6) mit einem als Übersetzungsausgabeabschnitt dienenden Übersetzungsanzeigeabschnitt (SB) und einem als Originalausgabeabschnitt dienenden Originalanzeigeabschnitt (SA) umfaßt.

5. Maschinenübersetzungssystem nach Anspruch 4, weiterhin mit:

einer Abrollbezeichnungseinrichtung (1) zum Bezeichnen eines Abrollens von wenigstens einem Text aus den ursprünglichen bzw. Originaltext und dem Übersetzungstext, die auf der Anzeigeeinrichtung (6) angezeigt sind, und

einer Abrollsteuereinrichtung (9) zum Abrollen der Sätze des ursprünglichen Textes und des Übersetzungstextes in beiden Original- und Übersetzungsanzeigeabschnitten (SA, SB) in Einheiten der jeweiligen ursprünglichen und übersetzten Sätze, wenn ein Abrollbefehl durch die Abrollbezeichnungseinrichtung (1) erzeugt ist.

6. System nach Anspruch 5, dadurch gekennzeichnet, daß die Abrollbezeichnungseinrichtung eine Zeigerschiebebezeichnungseinrichtung (1) zum Bezeichnen eines Zeigerschiebens umfaßt.

**Revendications**

1. Un système de traduction automatique comprenant :

des moyens de traitement de traduction (3, 4) comprenant un dictionnaire (4) prévu pour l'enregistrement de données de traduction nécessaires à la traduction, ces moyens de traitement de traduction (3, 4) étant conçus pour traduire un texte original donné en procédant phrase par phrase, pour traduire ainsi les phrases du texte original en phrases respectives d'un texte traduit;

des moyens de sortie (6, 10) destinés à présenter en sortie les phrases du texte d'origine et à présenter en sortie les phrases du texte traduit;

des moyens d'application (7, 8) destinés à appliquer aux moyens de sortie (6, 10) les phrases du texte d'origine et du texte traduit, caractérisé en ce que :

les moyens de sortie (6, 10) comprennent une section de sortie de traduction (SB) qui est destinée à présenter en sortie les phrases du texte traduit en lignes latérales, et une section de sortie d'original (SA) qui est destinée à présenter en sortie les phrases du texte original en lignes latérales, disposées côte à côte avec les phrases respectives du texte traduit; et

des moyens de commande de position de sortie (9) qui sont destinés à commander des positions de sortie des phrases du texte original et des phrases du texte traduit qui sont fournies par les moyens d'application (7, 8), de façon que chaque phrase du texte original et la phrase respective du texte traduit commencent à la même ligne s'étendant latéralement.

2. Un système selon la revendication 1, caractérisé en ce que les moyens de commande de position de sortie comprennent :

des moyens de séparation (9) qui sont destinés à insérer une ligne latérale de séparation prédéterminée entre des lignes finales et des lignes initiales des phrases respectives du texte original et du texte traduit.

3. Un système selon la revendication 2, caractérisé en ce que les moyens de séparation comprennent des moyens (9) qui sont destinés à insérer une ligne d'espacement à titre de ligne de séparation.

4. Un système selon la revendication 1, caractérisé en ce que les moyens de sortie comprennent des moyens de visualisation (6) ayant une section de visualisation de traduction (SB) qui remplit la fonction de la section de sortie de traduction, et une section de visualisation d'original (SA) qui remplit la fonction de la section de sortie d'original.

5. Un système de traduction automatique selon la revendication 4, comprenant en outre :

des moyens de désignation de défilement (1) qui sont destinés à désigner le défilement de l'un au moins des textes comprenant le texte original et le texte traduit qui sont visualisés sur les moyens de visualisation (6); et

des moyens de commande de défilement (9) destinés à faire défiler les phrases du texte original et du texte traduit, à la fois dans les sections de visualisation d'original et de traduction (SA, SB), avec pour incrément de défilement les phrases originales et traduites respectives, lorsque les moyens de désignation de défilement (1) produisent un ordre de défilement.

6. Un système selon la revendication 5, caractérisé en ce que les moyens de désignation de défilement comprennent des moyens de désignation de déplacement de curseur (1) conçus pour désigner un déplacement d'un curseur.

# F I G. 1

EP 0 196 898 B1

EP 0 196 898 B1

# F I G. 2

I saw a girl with a bag on the right bank yesterday.

This morning I saw that girl on the same place again.

I don't know her name and where she lives.

私は昨日右土手でバックを持つ少女を見た。

今朝再び同じ場所でその少女を見た。

私は彼女の名前や住んでいるところを知らない。

S

SA

SB

11

# F I G. 3

```
        ( START )
            │
            ▼
┌─────────────────────┐
│ SENTENCE            │ ⌐ a
│ NUMBER i ← O        │
│ DISPLAY LINE j ← 1  │
└─────────────────────┘
            │
            ▼
┌─────────────────────┐
│      i ← i + 1      │ ⌐ b
└─────────────────────┘
            │
            ▼
      c ◇ IS
         SENTENCE OF ─── NO ──→ ( END )
         NO.i PRESENT
              ?
            │ YES
            ▼
┌─────────────────────┐
│ DESIGNATE DISPLAY OF│ ⌐ d
│ SENTENCES (ORIGINAL │
│ AND TRANSLATED      │
│ SENTENCES) OF NO. i │
└─────────────────────┘
            │
            ▼
┌─────────────────────┐
│ DISPLAY ORIGINAL    │ ⌐ e
│ SENTENCE FROM jTH   │
│ LINE AND TRANSLATED │
│ SENTENCE FROM jTH   │
│ LINE                │
└─────────────────────┘
            │
            ▼
┌─────────────────────┐
│ FIND NUMBER Ei OF   │ ⌐ f
│ LINES OF DISPLAYED  │
│ ORIGINAL SENTENCE   │
│ AND FIND NUMBER Ji  │
│ OF LINES OF DISPLAYED,│
│ TRANSLATED SENTENCE │
└─────────────────────┘
            │
            ▼
┌─────────────────────┐
│  Mi ← Max(Ei,Ji)   │ ⌐ g
└─────────────────────┘
            │
            ▼
┌─────────────────────┐
│  j ← j + Mi + 1     │ ⌐ h
└─────────────────────┘
```

12

# F I G. 4A

SA · SB · J1

E1 — I saw a girl with a bag on the right bank yesterday.

私は昨日右土手でバックを持つ少女を見た。

E2 — This morning I saw that girl on the same place again.

今朝再び同じ場所でその少女を見た。

J2

CS

# F I G. 4B

E1 · J1

I saw a girl with a bag on the right bank yesterday.

私は昨日右土手でバックを持つ少女を見た。

This morning I saw that girl on the same place again.

今朝再び同じ場所でその少女を見た。

E2 · CS · J2

# F I G. 4C

E2 · J2

This morning I saw that girl on the same place again.

今朝再び同じ場所でその少女を見た。

I don't know her name and where she lives.

私は彼女の名前や住んでいるところを知らない。

E3 · CS · J3

EP 0 196 898 B1

F I G. 5